# EUROPEAN PATENT SPECIFICATION

(11) **EP 2 547 921 B1**
(45) Date of publication and mention of the grant of the patent: **06.01.2016**
(21) Application number: 11711769.7
(22) Date of filing: 14.03.2011
(51) Int. Cl.: F16C 9/02, F16C 33/10, F16C 33/74

(54) **HALF BEARING**
HALBLAGERSCHALE
DEMI-PALIER

(30) Priority: 15.03.2010 GB 201004221
(43) Date of publication of application: 23.01.2013
(73) Proprietor: MAHLE International GmbH, 70376 Stuttgart (DE); Mahle Engine Systems UK Limited, Rugby, Warwickshire CV23 0WE (GB); Mahle Composants Moteur France SAS, 74650 Chavanod (FR)
(72) Inventor: MIAN, Omar, Rugby CV22 7QL (GB); BARRAL, Stéphane, F-74370 Saint Martin Bellevue (FR)
(74) Representative: Stumkat, Ulrich
(86) International application number: PCT/EP2011/001248
(87) International publication number: WO 2011/113567

(56) References cited:
- EP-A1- 1 722 116
- EP-A1- 2 078 875
- DE-A1-102007 044 249
- DE-A1-102007 044 250

## Description

### FIELD OF THE INVENTION

The present invention relates to bearings, more particularly to bearings which enable an engine to operate with a lower volume flow rate of oil.

### BACKGROUND

Internal combustion engines are generally provided with an oil pump which has the capability of providing a much greater volume flow of oil than is needed under certain engine operating conditions. High oil pumping capacity is provided to supply the bearings of an engine with sufficient oil flow and pressure at engine idling speeds. However, when the engine is operating at normal vehicle operating speeds only about 10 to 25% of the oil pump's potential capacity may be utilised. The need to run oil pumps having greater capacity than is required for most of the engine's operating life has several disadvantages including: much energy being wasted by the pump being physically too large and consuming too much engine power to drive it; the oil pump is unnecessarily heavy; at higher engine speeds the pump provides too much oil pressure and the majority of the oil flow is diverted straight back into the engine sump via the oil pressure relief overflow valve without ever passing through the bearings.

The reasons for engines having overly large oil pumps for the majority of their operating lives relates mainly to the design of bearings employed in the engines. The volume of oil pumped is generally proportional to the speed at which the pump is driven. Both main and big-end bearings have a feature known as joint face crush relief which is effectively a larger clearance between the bearing running surface and the co-operating shaft journal surface at the region where the circumferential ends of two 180° half bearings meet in order to form a full 360° bearing about a shaft journal. When assembled in a housing the joint face crush relieves on the two bearings may form two areas of increased clearance typically of about 20° to 40° of bearing circumference arc diametrically opposed to each other in a 360° bearing. The effect of these areas of increased clearance is to provide a direct path for the oil pumped through the bearings to be expelled back into the sump thus, at low engine or idle speeds, a relatively high volume flow of oil is necessary to establish sufficient oil pressure. At higher engine operating speeds the volume flow output of the oil pump is too high and to prevent excess oil pressure being generated the excess oil flow is diverted back to the sump via the oil pressure relief valve.

US 2006/0263000 A1 describes bearings provided with circumferential sealing or "throttling elements" which reduce oil flow in the lateral or axial direction of the bearing and hence allow for a more constant oil pressure regardless of engine speed or temperature. However, in some embodiments the sealing elements are positioned in the bearing land area at or near the bearing axial ends. Such positioning of the sealing elements causes a relatively large reduction in the available "bearing width" in the axial direction. Since bearing axial length in a given engine design is a relatively fixed parameter with little scope for being increased this can lead to unacceptable increases in specific bearing loads.

DE 10 2007 044 250 A1 discloses a bearing comprising all the features of the preamble of claim 1.

It is an object of the present invention to provide a bearing which requires a relatively lower oil supply flow rate at low engine speeds than hitherto and consequently to be able to utilise a lower capacity oil pump in an engine using the bearings. It is a further object to provide a bearing which mitigates the disadvantages of known bearings.

### BRIEF SUMMARY OF THE DISCLOSURE

According to a first aspect of the present invention there is provided a 180° half bearing, the bearing comprising a circumferential groove intermediate axial ends of the bearing, at least one sealing member located in the groove and adapted to seal with a co-operating journal member, in use, said sealing member being urged against said journal member in use by an associated oil supply which provides oil pressure onto a back surface of the sealing member through an oil supply hole in the bearing. In a 360° bearing such as an engine main bearing, for example, there may one 180° bearing according to the present invention in an engine cylinder block housing position and a second 180° plain bearing having no grooves and sealing members therein in the main bearing cap position.

In one embodiment the bearing according to the present invention there may be one relatively wide groove substantially mid-way between the bearing axial ends of the 180° half bearing and having a single sealing member commensurate in width therewith but being able to move easily therein in a radial direction. The seal member may be a generally U-shaped channel section with the open portion of the channel facing the associated shaft journal in use.

The sealing members may be made from suitable metallic and/or polymeric materials.

The seal member or members in this and in other embodiments may be of a radial thickness and/or geometry so as to be preferably able to be completely contained within the radial depth of the at least one circumferential groove. However, it is possible that the seal members may stand slightly proud of the bearing surface within the clearance formed between the bearing bore surface and shaft journal surface.

In an alternative embodiment the half bearing may have a relatively wide substantially centrally disposed main groove but having therein two sub-groove portions, each sub-groove portion being adapted to receive an individual sealing member therein and forming a relatively high volume groove space therebetween. The sealing members in all embodiments are adapted to be able to move relatively to the groove in which they are housed in a predominantly radial direction under the influence of supplied oil pressure and running loads during engine operation.

The oil supply hole extends beyond the axial limits of the groove in the axial direction of the bearing. Thus, the area of the oil supply hole extends over a small area axially beyond the sealing member in the region between the sealing member and the axial ends of the half bearing. This way oil may be supplied directly to the functional area of the bearing from those portions of the oil supply hole which lie axially outwardly of the extent of the sealing members.

In many prior art bearing applications in production engines the oil supply to a main bearing is provided from an oil gallery in the cylinder block which gallery coincides with the oil supply hole in the bearing half located in the cylinder block housing adjacent the oil gallery. That bearing half generally has a circumferential groove around its inner bore periphery to conduct oil to a second main half bearing generally situated in the cap half. Oil under pressure in the grooved half bearing spreads laterally to the clearance between the bearing lining running surface and the shaft journal surface. Oil also spreads laterally (axially in the bearing axis direction) at the joint face crush relieves regions at the junctions where the circumferential ends of the half bearings meet and the oil in this region both escapes largely back to the sump whilst a part of it is carried by oil pressure and by viscous drag of the shaft journal surface into the clearance gap between the bearing lining surface and shaft journal surface to lubricate the ungrooved, plain main bearing cap half bearing.

In the present invention a 360° main bearing assembly comprising two 180° bearing halves may preferably comprise a half bearing according to the present invention in the cylinder block housing and a second, plain, ungrooved half bearing in the cap housing. However, whilst the second half bearing in the cap housing position does not have the seal members, that bearing may also not have the conventional joint face crush relief regions, i.e. the nominal bore dimension of the bearing may be continued up to the joint face of the second, un-grooved half bearing to where it meets with the joint faces of the grooved half bearing according to the present invention.

Whilst the major portion of the oil flow in the bearing according to the present invention is constrained to flow in the grooved portion of the bearing and be prevented or inhibited from spreading axially due to the effect of the sealing members, when the oil reaches the joint face region with the second, plain, ungrooved bearing half, the joint face relief, where present, of the second bearing half permits lateral spreading of the oil so that the bearing lining running surface of the second bearing half is fully lubricated as described above. However, even without joint face relief on the second half bearing, sufficient oil is present for lubrication by virtue of that oil dragged around the bearing surface by the oil viscosity effect with the rotating shaft journal surface. Thus, in the case where the second un-grooved bearing half is not provided with joint face relief, an even lower oil flow may be established whilst still providing a required oil pressure. It is possible to have a joint face relief which has a value lying between what has conventionally been considered necessary and zero joint face relief in the second, un-grooved bearing half.

The ability of the bearing according to the present invention to retain a larger proportion of the pumped oil within the confines of the clearance envelope defined between the bearing lining running surface and the shaft journal surface permits the use in an engine of a smaller capacity, less energy consuming and lighter oil pump. Oil is generally fed to the big end bearings from an oil hole in the main bearing shaft journal via an oil supply hole to the big end shaft journal. Oil is tapped under pressure from the main bearing and supplied to the big end bearing. The bearing according to the present invention is able to retain and transmit sufficient oil under sufficient oil pressure to provide the required oil pressure and flow rate to the associated big end bearings.

The basic half bearings according to the present invention may be produced from essentially the same materials as are known in the art. For example, the bearing may have a layer of a strong backing material such as steel; a layer of a bearing lining material of aluminium-based or copper-based bearing material. The provision of a so-called overlay sliding surface layer may also be provided in known manner. Various thin interlayers provided between the backing, lining and overlay may also be used as is known in the bearings art to enhance adherence between layers and/or to provide diffusion barriers, for example.

### BRIEF DESCRIPTION OF THE DRAWINGS

In order that the present invention may be more fully understood, examples will now be described by way of illustration only with reference to the accompanying drawings, of which:
Figure 1 shows a plan view of the bearing surface of a first embodiment of a bearing according to the present invention;
Figure 2 shows a cross section on the line 2-2 of Figure 1;
Figure 3 shows the bearing of Figs 1 and 2 installed in the engine block housing of a main bearing together with a plain half bearing in the main bearing cap housing and a crankshaft main bearing journal;
Figure 4 shows a view in the axial direction of a cross section through the sealing member at the junction between the bearing of Figs 1 to 3 and a second, ungrooved plain half bearing of Figure 3;
Figure 5 shows a plan view of the bearing surface of a second embodiment of a bearing according to the present invention; and
Figure 6 which shows a cross section on the line 6-6 of Figure 5.

### DETAILED DESCRIPTION

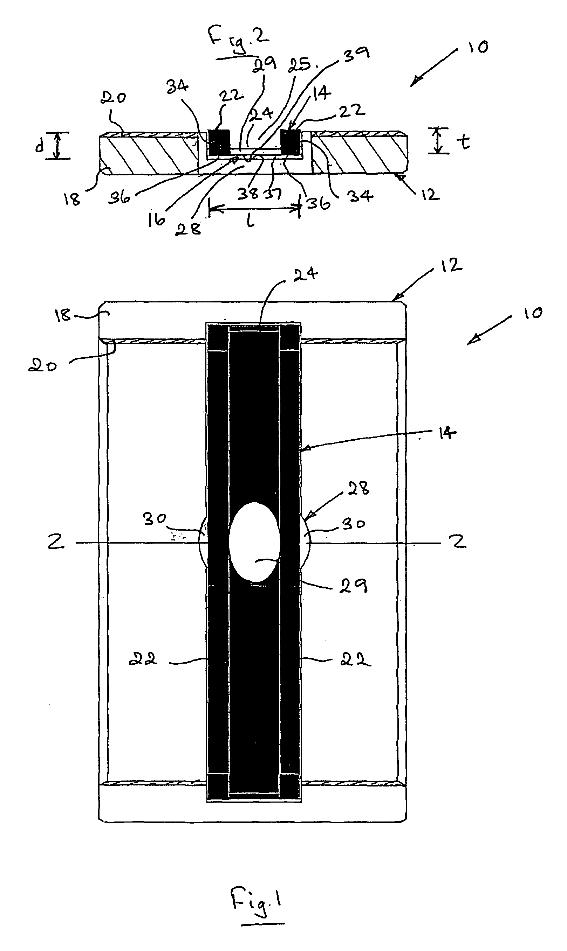

Referring now to Figures 1 to 3 of the drawings and where the same features are denoted by common reference numerals.

A first embodiment of a half bearing according to the present invention is shown at 10. The bearing comprises a supporting half bearing 12 and a sealing member 14 located in a groove 16. The supporting half bearing 12 comprises a strong backing of steel 18 (but could be a bronze material for example) and a lining layer of a suitable bearing alloy 20 which may, for example, be aluminium-based or copper-based in known manner. The bearing lining layer 20 may be provided with an overlay coating (not shown) if appropriate in known manner. The sealing member is provided in the form of a U-shaped channel section comprising two semi-circular sealing strip portions 22 and a bridging piece 24 and which between them form a cavity 25 of relatively large cross sectional area. The sealing member 14 may be made of metallic or polymeric material, for example. The overall radial thickness "t" of the sealing member 14 may be completely accommodated within the depth "d" of the groove 16. The supporting half bearing 12 is provided with an oil supply hole 28 which in this case has a width in the axial direction or diameter (though the hole 28 is not necessarily circular) greater than the axial length "I" of the sealing member thus providing two small areas 30 lying axially outwardly of both the groove 16 and the outer faces 34 of the sealing member 14. The sealing member 14 is also provided with an oil supply hole 29 in the bridging portion 24 and corresponding in position to the oil supply hole 28 of the supporting bearing 12. The sealing member 14 is a sliding fit in the groove 16 without excessive clearance between the radially directed walls 36 of the groove 16 and the faces 32 of the sealing member. A small oil containing cavity 37 is formed between the base 38 of the groove 16 and the outer, convex surface 39 of the sealing member 14, the cavity 37 extending around the circumference of the bearing between the groove 16 and the sealing member.

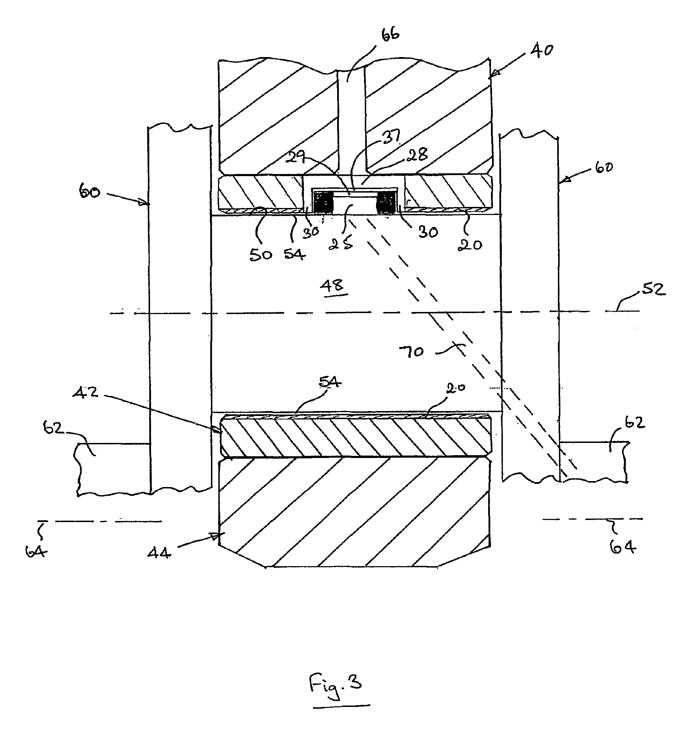

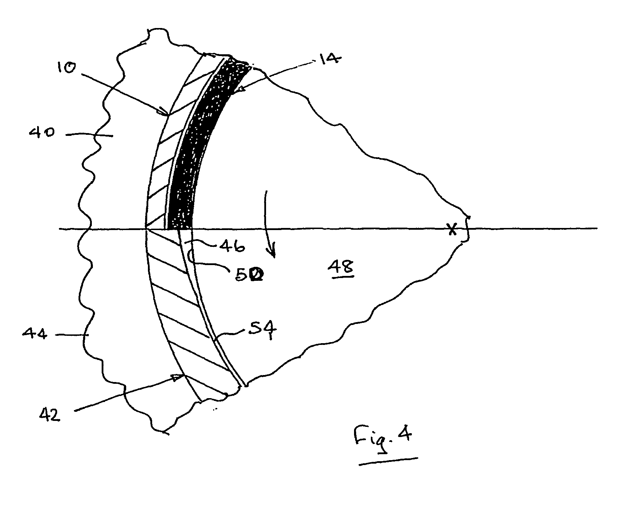

Referring now to Figures 3 and 4 and where the bearing 10 is shown installed in the engine block main bearing housing 40 and a second, un-grooved plain half bearing 42 is shown installed in the main bearing cap half 44 of the housing. The bearing 42 is a conventional ungrooved bearing having a joint face relief region 46 (Fig.4) in known manner. The two bearing halves are assembled about a crankshaft journal 48 having a running surface 50 which co-operates with the bearing lining layers 20 on the two half bearings and which journal rotates about an axis 52. There is a clearance 54 provided between the shaft journal surface 50 and the surface of the bearing linings 20. The crankshaft has web portions 60 on the ends of the journal 48 in known manner and the web portions have big end journals 62 supported thereon the big end journals having an axis 64. The big end journals 62 support connecting rods and pistons (both not shown) in known manner. The main bearing housing 40 in the engine block is provided with an oil gallery 66 to supply oil under pressure from an associated oil pump (not shown) to the oil supply hole 28 of the bearing 10 and to the oil supply hole 29 of the sealing element 14. The main bearing journal has an oil way 70 to convey lubricating oil from the cavity region 25 of the sealing member 14 to the big end journal 62 to lubricate under pressure the big end journal bearings in the connecting rod (not shown).

In operation, the sealing member co-operates with the surface 50 of the shaft journal 48 (see Figs. 3 and 4) and is able to move in a generally radial direction relative to the groove 14 under the influence of oil pressure. Oil is supplied under pressure from the engine oil pump to the oil gallery 66 and thence to the oil supply holes 28 and 29. The cavity 37 between the base of the groove 14 and the back of the sealing member receives oil from the oil hole 29, in fact, the whole region from the oil gallery 66, cavity 37, cavity 25 and clearance 54 receives oil under pressure. However, the pressure in the cavity 37 on the back face 39 of the sealing member is slightly greater than in the cavity 25 and consequently the sealing member is urged into "contact" with the shaft journal surface 50. There is, however, always an oil film between the running surface of the sealing strip portions 22 and the journal surface so that wear is low. The main volume of oil flow is around the cavity 25 in the sealing member, however, some of the lubricating oil flows out of the small area portions 30 which lie outside the axial ends of the sealing member and consequently flows directly into the clearance 54 of the main working surface of the bearing. This oil flowing from the areas 30 is assisted in its distribution by viscous drag of the rotating shaft journal surface 50, the oil spreading axially across the bearing surface to the axial ends thereof. Oil flowing around the cavity 25 does not suffer the same degree of pressure drop (compared with the pressure in the oil gallery 66) as in a conventional grooved bearing having joint face relief since the areas of the oil supply holes 28, 29 are large and the cross sectional area of the cavity 25 is large, and therefore, the resistance to oil flow is comparatively small producing a lower pressure drop. When the oil flowing in the cavity 25 reaches the junction with the second, plain bearing 42 (see Fig.4) the joint face relief region 46 allows axially directed spreading of the oil and the oil is spread around the working surface by viscous drag from the journal surface 50.

The retained high oil pressure and high volume in the cavity 25 provides more than sufficient oil to supply the associated big end bearings (not shown) at a required oil pressure on the journals 62 via the oil drilling 70.

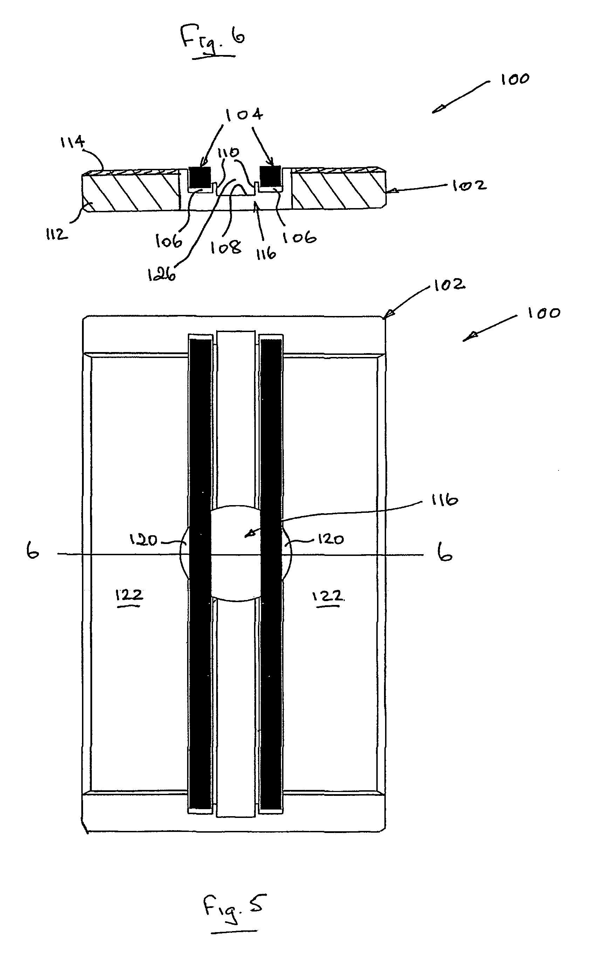

Referring now to Figures 5 and 6 and where a second embodiment 100 of a bearing according to the present invention is shown.

In this second embodiment, the bearing 100 again comprises a support half bearing 102 but in this instance has two separate sealing members 104 which are retained in individual sub-grooves 106 which are formed in a single, substantially axially centrally disposed main oil carrying groove 108, the sealing members 104 being located in the axial direction by wall portions 110. The features of the supporting half bearing 102 are essentially the same or similar to those of the first embodiment in that there is a strong backing material 112 such as steel, for example, and a lining layer of a bearing material 114 and all the alternative options described above. An oil supply hole 116 is provided through the supporting bearing 102, the oil supply hole extending in the axial direction to extend beyond the sealing members 104 to form, as before, two small areas 120 giving direct oil access to the functional areas 122 of the bearing 100 for lubrication purposes. The sealing members 104 are able to be completely accommodated within the sub-grooves 106 in terms of height as with the sealing member 14 of the first embodiment. Between the two sealing members 104 is created a relatively large area groove or cavity 126 which causes a much lower resistance to oil flow than a conventional bearing having a central lubrication groove.

The operation of this bearing is essentially the same as with the first embodiment in that it is assembled in an engine block main bearing housing with a second, plain ungrooved half bearing which is in the main bearing cap housing. The relative structures of the assembled main bearing are essentially similar to the structure depicted in Figures 3 and 4 relating to the first embodiment, the principal difference being that there are two separate sealing members in the second embodiment as opposed to a single sealing member of unitary construction in the first embodiment, but which also has two spaced-apart sealing elements. Oil pressure from the associated oil gallery entering the bearing through the oil supply hole 116 causes the sealing members 104 to be urged towards the shaft journal surface thus preventing significant leakage of oil flow from the cavity 126 in the axial direction especially at the joint face region of the bearing 100. Oil is also fed directly to the two small areas 120 to provide lubrication to the main functional areas 122 of the bearing, the oil being spread around the bearing by viscous drag of the shaft journal surface. As in the first embodiment discussed with respect to Figures 3 and 4, when oil reaches the junction with the second, plain ungrooved bearing the oil is able to spread axially at the joint face relief portion of the second bearing, the oil being distributed around the bearing by viscous drag from the journal surface thus, oil is available to lubricate the whole surface area of the second bearing.

All of the advantages provided by the first embodiment are also provided by the second embodiment.

By conserving a higher proportion of the volume of oil flowing in the main bearings of an engine whilst still retaining adequate lubrication and pressure, it is possible to utilise a smaller capacity oil pump which may also be both physically smaller and lighter.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A half bearing (12, 102), the half bearing comprising a circumferential groove (16, 108) intermediate axial ends of the half bearing (12, 102), at least one sealing member (14, 104) located in the groove (16, 108) and adapted to seal with a cooperating journal member (48), in use, said sealing member (14, 104) being urged against said journal member (48) in use by an associated oil supply which provides oil pressure onto a back surface (39) of the sealing member (14, 104) through an oil supply hole (28, 116) in the half bearing (12, 102),
**characterized in that** said oil supply hole (28, 116) has an axial dimension greater than the axial extent of said at least one sealing member (14, 104).

2. A half bearing (12) according to claim 1 wherein the sealing member (14) is of U-shaped channel section.

3. A half bearing (12) according to any one preceding claim wherein the sealing member (14) comprises two separate circumferentially directed sealing element portions (22) connected by a bridging piece (24).

4. A half bearing (12) according to any one preceding claim wherein the sealing member (14) is located in a single groove (16).

5. A half bearing (102) according to claim 1 wherein the sealing members comprise two separate spaced-apart, circumferentially directed sealing members (104).

6. A half bearing (102) according to claim 5 wherein the sealing members are located in sub-grooves (106) within a main groove (108).

7. A half bearing (12, 102) according to any one preceding claim wherein the at least one sealing (14, 104) member may be completely accommodated within a depth of the groove (16, 108).

8. A 360° engine bearing assembly (10, 100) comprising one half bearing (12, 102) according to any one of claims 1 to 7 and a second, plain half bearing (42).

9. A 360° bearing assembly (10, 100) according to claim 8 wherein the half bearing (12, 102) according to any one of claims 1 to 7 is retained in an engine block main bearing housing (40) and the second, plain half bearing is retained in a main bearing cap housing (44).

10. An internal combustion engine having a half bearing (12, 102) according to any one of preceding claims 1 to 7.

11. An internal combustion engine having a bearing assembly (10, 100) according to any one of preceding claims 8 and 9.

## Patentansprüche

1. Lagerschale (12, 102), wobei die Lagerschale eine umlaufende Nut (16, 108) umfasst, sowie zwischenliegende axiale Enden der Lagerschale (12, 102), zumindest einen Dichtkörper (14, 104), der in der Nut (16, 108) angebracht, und ausgeführt ist, um bei der Anwendung gemeinsam mit einem Lagerzapfen (48) abzudichten, wobei der besagte Dichtkörper (14, 104) bei der Anwendung durch eine entsprechende Ölzufuhr an den besagten Lagerzapfen (48) angedrückt wird, die durch eine Ölzufuhrbohrung (28, 116) in der Lagerschale (12, 102) einen Öldruck an einer Rückseite (39) des Dichtkörpers (14, 104) anlegt, **dadurch gekennzeichnet, dass** die besagte Ölzufuhrbohrung (28, 116) eine axiale Abmessung aufweist, die größer ist, als das axiale Maß des besagten zumindest einen Dichtkörpers (14, 104).

2. Lagerschale (12) nach Anspruch 1, wobei der Dichtkörper (14) einen U-förmigen Kanalquerschnitt aufweist.

3. Lagerschale (12) nach irgendeinem der vorherigen Ansprüche, wobei der Dichtkörper (14) zwei voneinander getrennte umlaufend gerichtete Dichtkörperabschnitte (22) umfasst, die durch ein Überbrückungsstück (24) verbunden sind.

4. Lagerschale (12) nach irgendeinem der vorherigen Ansprüche, wobei der Dichtkörper (14) in einer einzelnen Nut (16) angeordnet ist.

5. Lagerschale (102) nach Anspruch 1, wobei die Dichtkörper zwei räumliche voneinander getrennte und umlaufend gerichtete Dichtkörper (104) umfassen.

6. Lagerschale (102) nach Anspruch 5, wobei die Dichtkörper in Unternuten (106) innerhalb der Hauptnut (108) angeordnet sind.

7. Lagerschale (12, 102) nach irgendeinem der vorherigen Ansprüche, wobei der zumindest ein Dichtkörper (14, 104) vollständig innerhalb einer Tiefe der Nut (16, 108) untergebracht sein kann.

8. 360° Motor-Lagerbaugruppe (10, 100), eine Lagerschale (12, 102) nach irgendeinem der Ansprüche 1 bis 7, und eine zweite Gleitlagerschale (42) umfassend.

9. 360° Motor-Lagerbaugruppe (10, 100) nach Anspruch 8, wobei die Lagerschale (12, 102) nach irgendeinem der Ansprüche 1 bis 7 in einem Hauptlagergehäuse (40) eines Motorblocks gehalten wird und die zweite Gleitlagerschale in einem Hauptlager-Deckelgehäuse (44) gehalten wird.

10. Verbrennungsmotor mit einer Lagerschale (12, 102) nach irgendeinem der vorherigen Ansprüche 1 bis 7.

11. Verbrennungsmotor mit einer Lagerbaugruppe (10, 100) nach irgendeinem der vorherigen Ansprüche 8 und 9.

## Revendications

1. Demi-palier (12, 102), le demi-palier comprenant une rainure circonférentielle (16, 108) entre des extrémités axiales intermédiaires du demi-palier (12, 102), au moins un élément d'étanchéité (14, 104) positionné dans la rainure (16, 108) et adapté pour réaliser l'étanchéité avec un élément de tourillon coopératif (48), à l'usage, ledit élément d'étanchéité (14, 104) étant poussé contre ledit élément de tourillon (48), à l'usage, par une alimentation en huile associée qui fournit la pression d'huile sur une surface arrière (39) de l'élément d'étanchéité (14, 104) par le biais d'un trou d'alimentation en huile (28, 116) dans le demi-palier (12, 102),
**caractérisé en ce que** ledit trou d'alimentation en huile (28, 116) a une dimension axiale supérieure à l'étendue axiale dudit au moins un élément d'étanchéité (14, 104).

2. Demi-palier (12) selon la revendication 1, dans lequel l'élément d'étanchéité (14) a une section de canal en forme de U.

3. Demi-palier (12) selon l'une quelconque des revendications précédentes, dans lequel l'élément d'étanchéité (14) comprend deux parties d'élément d'étanchéité (22) séparées dirigées de manière circonférentielle, raccordées par une pièce de liaison (24).

4. Demi-palier (12) selon l'une quelconque des revendications précédentes, dans lequel l'élément d'étanchéité (14) est positionné dans une rainure (16) unique.

5. Demi-palier (102) selon la revendication 1, dans lequel les éléments d'étanchéité comprennent deux éléments d'étanchéité (104) séparés, dirigés de manière circonférentielle.

6. Demi-palier (102) selon la revendication 5, dans lequel les éléments d'étanchéité sont positionnés dans des rainures auxiliaires (106) à l'intérieur d'une rainure principale (108).

7. Demi-palier (12, 102) selon l'une quelconque des revendications précédentes, dans lequel le au moins un élément d'étanchéité (14, 104) peut être complètement logé dans une profondeur de la rainure (16, 108).

8. Ensemble de palier de moteur à 360° (10, 100) comprenant un demi-palier (12, 102) selon l'une quelconque des revendications 1 à 7 et un second demi-palier lisse (42).

9. Ensemble de palier à 360° (10, 100) selon la revendication 8, dans lequel le demi-palier (12, 102) selon l'une quelconque des revendications 1 à 7, est retenu dans un boîtier de palier principal (40) de bloc moteur et le second demi-palier lisse est retenu dans un boîtier de capuchon de palier principal (44).

10. Moteur à combustion interne ayant un demi-palier (12, 102) selon l'une quelconque des revendications 1 à 7.

11. Moteur à combustion interne ayant un ensemble de palier (10, 100) selon l'une quelconque des revendications 8 et 9.
